# FASCICULE DE BREVET EUROPEEN

(11) **EP 3 722 013 B1**
(45) Date de publication et mention de la délivrance du brevet: **23.06.2021**
(21) Numéro de dépôt: 20167506.3
(22) Date de dépôt: 01.04.2020
(51) Int. Cl.: B07C 5/36, B07C 3/08, B65G 47/38

(54) **EQUIPEMENT DE TRI DE COLIS AVEC SYSTÈME DE PERMUTATION DE RÉCEPTACLES EN SORTIE DE TRI**
PAKETSORTIERANLAGE MIT EINEM WECHSELSYSTEM DER BEHÄLTER AM SORTIERAUSGANG
DEVICE FOR SORTING PARCELS WITH SYSTEM FOR PERMUTATION OF CONTAINERS AT THE SORTING OUTPUT

(30) Priorité: 10.04.2019 FR 1903822
(43) Date de publication de la demande: 14.10.2020
(73) Titulaire: Solystic, 92220 Bagneux (FR)
(72) Inventeur: CZUKOR, Christophe, 26120 Chabeuil (FR); CHIROL, Luc, 75016 Paris (FR); VOLTA, Bruno, 91190 Gif sur Yvette (FR)
(74) Mandataire: Prugneau, Philippe

(56) Documents cités:
- WO-A1-2017/202242
- CN-A- 107 008 656
- US-B1- 8 919 529

## Description

### Domaine technique

L'invention concerne un équipement de tri de colis comprenant un convoyeur de tri, des sorties de tri réparties le long dudit convoyeur et une unité de contrôle-commande apte à commander le convoyeur de tri pour trier les colis dans les sorties de tri en fonction de leur adresse de destination.

### Technique antérieure

Les plateformes logistiques sont aujourd'hui équipées de systèmes automatisés de tri de colis afin de traiter des colis en provenance de nombreuses sources d'approvisionnement et de les distribuer vers un grand nombre de destinataires.

Les documents WO2018/115608 et US8919529 décrivent à ce propos un équipement automatisé de tri de colis comprenant un convoyeur sur lequel des colis à trier sont convoyés et sous lequel des sorties de tri sont réparties. Une unité de contrôle-commande commande ici le convoyeur de tri pour trier les colis dans les sorties de tri en fonction de leur adresse de destination.

L'augmentation actuelle du volume d'achat via le e-commerce des petits paquets imports, dits PPI, nécessite d'augmenter le nombre de passes de tri et la vitesse de débit des convoyeurs avec le risque de détériorer les colis.

En parallèle, l'augmentation du nombre de destinations physiques sur un même plan de tri nécessite d'augmenter le nombre de sorties de tri et donc l'emprise au sol de l'installation.

Aussi, plus le nombre de sorties de tri sera important et plus les moyens de manutention mis en œuvre pour récupérer les colis devront être importants.

### Exposé de l'invention

La présente invention a pour objet un équipement de tri contribuant à résoudre les problèmes mentionnés ci-dessus.

A cet effet, l'invention a pour objet un équipement de tri de colis comprenant un convoyeur de tri, des sorties de tri réparties le long dudit convoyeur et une unité de contrôle-commande apte à commander le convoyeur de tri pour trier les colis dans les sorties de tri en fonction de leur adresse de destination, chaque sortie de tri étant agencée pour stocker une pluralité de réceptacles de tri chacun associé à une adresse de destination de colis en mémoire de l'unité de contrôle-commande, caractérisé en ce que l'équipement comprend également à chaque sortie de tri un dispositif de permutation des réceptacles comprenant un arbre mobile en rotation autour d'un axe muni de moyens d'accostage pour réceptacles de sorte que l'arbre est conçu pour entrainer en rotation autour de l'axe les réceptacles accostés, et en ce que l'unité de contrôle-commande commande le dispositif de permutation pour immobiliser un réceptacle, dont l'adresse de destination de colis associée en mémoire de l'unité de contrôle-commande correspond à l'adresse de destination d'un colis courant à trier, dans une position de remplissage dans laquelle le réceptacle est positionné sous la sortie de tri pour réceptionner un colis.

L'équipement de tri de colis selon l'invention peut avantageusement présenter les caractéristiques suivantes :
- le dispositif de permutation comprend une coiffe de verrouillage présentant une ouverture latérale, ladite coiffe venant coiffer l'arbre et les moyens d'accostage de sorte à empêcher le retrait d'un réceptacle accosté au moyen d'accostage lorsqu'il est en position de remplissage et à autoriser l'évacuation d'un réceptacle accosté au moyen d'accostage par l'ouverture de la coiffe lorsqu'il est dans une position d'évacuation dans laquelle le réceptacle est orienté à l'opposé d'un réceptacle en position de remplissage par rapport à l'arbre ;
- la coiffe de verrouillage est également apte à empêcher le retrait d'un réceptacle accosté au moyen d'accostage entre les positions de remplissage et d'évacuation ;
- le dispositif de permutation comprend des rampes parallèles deux à deux et s'étendant sensiblement horizontalement depuis l'arbre, les rampes étant agencées pour porter les réceptacles au-dessus du sol une fois les réceptacles accostés ;
- les rampes présentent une extrémité libre sensiblement inclinée vers le sol ;
- le dispositif de permutation comprend un système de détection de position de réceptacle apte à déterminer quel réceptacle de la sortie de tri est en position de remplissage, et l'unité de contrôle-commande comprenant en mémoire l'ordonnancement des réceptacles au niveau de chaque sortie de tri et, en réponse à la détection dudit système de détection, commande la rotation du dispositif de permutation pour placer en position de remplissage le réceptacle dont l'adresse de destination correspond à l'adresse de destination du colis courant à trier ;
- un système de détection du niveau de remplissage de réceptacle en position de remplissage est prévu, et en réponse au dépassement d'un certain seuil du niveau de remplissage du réceptacle, l'unité de contrôle-commande commande le déplacement du réceptacle en position d'évacuation ;
- chaque sortie de tri est équipée d'une trémie de remplissage qui s'étend vers le bas depuis le convoyeur vers un réceptacle en position de remplissage ;
- les réceptacles sont des sacs ouverts sur le dessus montés sur des trolleys à roulettes ;
- le convoyeur est un convoyeur en boucle.

L'idée à la base de l'invention est ici d'avoir un nombre de sorties de tri dites logiques, ou potentielles, plus important que le nombre de sorties de tri physiques.

Pour cela chaque sortie de tri de l'équipement de tri est équipée de plusieurs réceptacles associés chacun à des adresses de destination différentes. Un système de permutation de réceptacles est également prévu pour déplacer en rotation les réceptacles de la sortie de tri pour en positionner un seul en position de remplissage sous la sortie de tri appropriée.

On comprendra par exemple que pour une sortie de tri physique comprenant quatre réceptacles associés chacun à une adresse de destination de colis différente, il y aura trois sorties logiques de plus qu'avec une simple sortie de tri munie d'un seul réceptacle.

Ainsi, l'équipement de tri selon l'invention pourra desservir autant d'adresses de destination que de réceptacles affectés à la sortie de tri et ce pour une emprise au sol équivalente à celle d'équipement de tri classique.

### Description sommaire des dessins

La présente invention sera mieux comprise et d'autres avantages apparaîtront à la lecture de la description détaillée de modes de réalisation pris à titre d'exemples nullement limitatifs et illustrés par les dessins annexés, dans lesquels :
- La figure 1 est une représentation schématique d'une sortie de tri d'un équipement de tri selon l'invention équipée d'un système de permutation avec un réceptacle en position de remplissage ;
- La figure 2 est une représentation schématique d'un équipement de tri selon l'invention ;
- La figure 3 est une représentation très schématique d'un bac et du système de permutation selon l'invention ;
- La figure 4 est une représentation schématique d'un bac et du système de permutation selon l'invention dans lequel le réceptacle prend appui sur les rampes du système de permutation pour positionner le réceptacle en position surélevée ;
- La figure 5 est une représentation schématique de dessus d'une portion d'un équipement de tri selon l'invention ;
- La figure 6 est une représentation schématique des moyens de blocage et de verrouillage du dispositif de permutation selon l'invention.

### Description d'un premier mode de réalisation

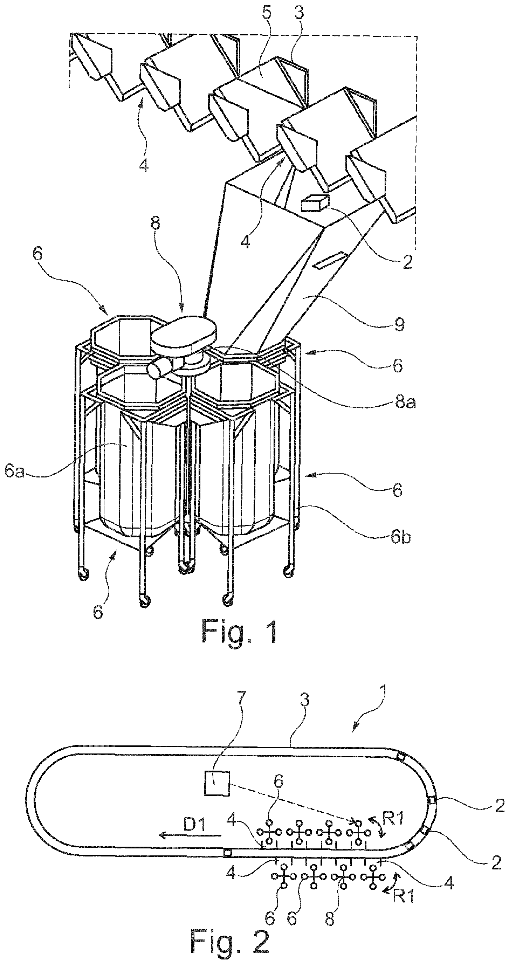

La figure 2 représente un équipement de tri 1 de colis 2 selon l'invention conçu pour équiper un centre de tri tel qu'un centre logistique d'accueil et de redistribution de colis 2.

L'équipement de tri 1 de colis 2 selon l'invention comprend un convoyeur de tri 3, ici par exemple un convoyeur à boucle qui se déplace selon une certain direction de convoyage D1, et des sorties de tri 4 réparties le long du convoyeur de tri 3.

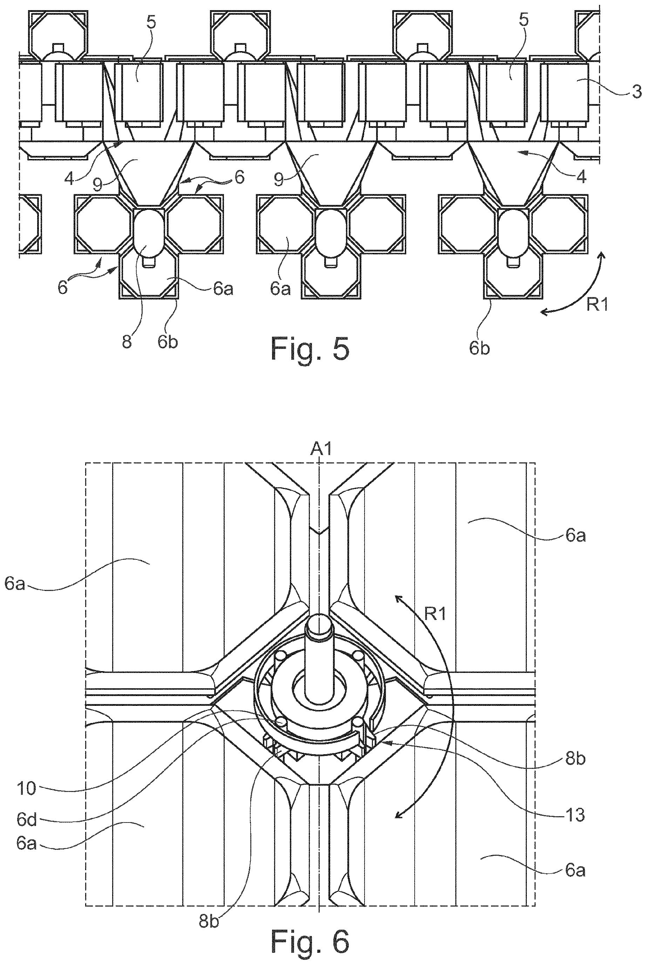

Le convoyeur de tri 3 comprend des plateaux 5 pivotants, comme représenté sur les figures 1 et 5, aptes à pivoter pour laisser chuter par gravité les colis 2 dans les sorties de tri 4 appropriées.

Chaque sortie de tri 4 est équipée d'une pluralité de réceptacles 6 pour colis 2, dont le nombre peut varier en fonction du nombre d'adresses de destination de colis 2 à trier.

Les réceptacles 6 se présentent par exemple sous la forme de sacs 6a ouverts sur le dessus montés sur des trolleys à roulettes 6b, comme représenté sur la figure 1.

Ce type de réceptacles 6 est particulièrement bien adapté au remplissage en vrac par des colis 2 de petites taille, dits PPI.

Les réceptacles 6 sont chacun associés à une adresse de destination de colis 2 en mémoire d'une unité de contrôle-commande 7 de l'équipement de tri 1.

L'unité de contrôle-commande 7, telle que représentée sur la figure 2, comprend également en mémoire un plan de tri des colis 2 à trier qui est défini à partir de la répartition de l'ensemble des réceptacles 6 et des sorties de tri 4 au sein de l'équipement de tri 1 et à partir des adresses de destination de l'ensemble des colis 2 à trier.

Un dispositif de permutation 8 des réceptacles 6 représenté sur l'ensemble des figures 1 à 6, est également prévu à chaque sortie de tri 4 et comprend un arbre 8a mobile en rotation autour d'un axe A1 muni de moyens d'accostage 8b pour réceptacles de sorte que l'arbre est conçu pour entrainer en rotation autour de l'axe les réceptacles 6 accostés à l'arbre 8a.

L'arbre 8a est ici conçu pour se déplacer dans le sens horaire ou antihoraire, et pour immobiliser après chaque rotation un réceptacle 6 dans une position de remplissage dans laquelle le réceptacle 6 est disposé sous la sortie de tri 4 pour réceptionner un colis 2.

L'unité de contrôle-commande 7 est paramétrée pour commander le dispositif de permutation 8 sur la base des adresses de destination des colis 2 à trier et du plan de tri.

Ainsi, l'unité 7 commande le dispositif de permutation 8 afin de placer en position de remplissage un réceptacle 6 dont l'adresse de destination de colis 2 qui lui est associée correspond à l'adresse de destination d'un colis 2 courant à trier dans la sortie de tri 4.

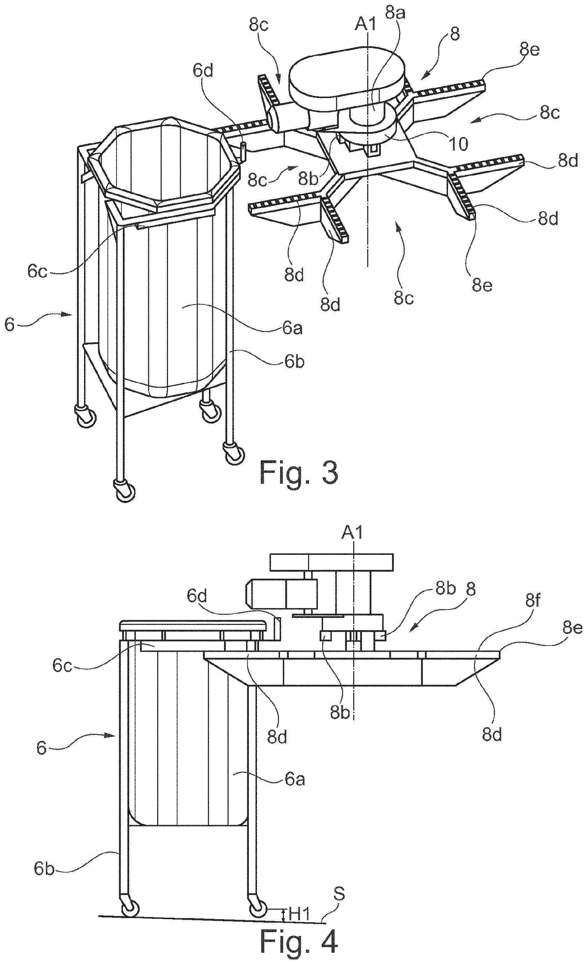

De manière avantageuse, le dispositif de permutation 8 présente ici une structure en forme de barillet bien visible sur les figures 1 et 4, muni d'un actionneur électrique ou pneumatique, avec tout autour de l'arbre 8a des emplacements d'accostage 8c pour réceptacles 6, ici au nombre de quatre sur les figures 1 à 5.

On comprendra donc que l'augmentation du nombre d'emplacements d'accostage 8c augmente le nombre de sorties logiques, favorisant de fait la diminution du nombre de passes de tri sur le convoyeur de tri 3.

Chaque emplacement d'accostage 8c est ici délimité par une paire de rampes 8d parallèles deux à deux et s'étendant horizontalement de l'arbre 8a.

Les rampes forment ici des bras supports pour réceptacles 6 de sorte à porter les réceptacles 6 au-dessus du sol S une fois les réceptacles accostés.

Comme représenté sur la figure 4, le réceptacle 6 en cours d'accostage est partiellement surélevé d'une hauteur H1.

Les frottements des réceptacles 6 avec le sol S sont donc ici supprimés ce qui limite l'effort lors de rotation de l'arbre autour de l'axe A1.

Les rampes 8d peuvent également présenter une extrémité libre 8e, représentée sur les figures 3 et 4, inclinée vers le sol afin de guider les réceptacles 6 pour leur insertion dans les emplacements d'accostage 8c.

Les réceptacles 6 pourront d'ailleurs être équipés de fourches 6c aptes à coopérer par glissement avec les rampes 8d.

Des galets fous 8f pourront également être disposés sur les rampes 8d, ou bien sous les fourches 6c afin de faciliter ce glissement.

Comme représenté sur la figure 5, les sorties de tri 4 sont préférentiellement réparties en alternance de part et d'autre du convoyeur de tri 3.

L'alternance des dispositifs de permutation 8 de part et d'autre du convoyeur de tri 3 permet d'optimiser l'utilisation de la surface au sol S et d'augmenter le nombre de sorties de tri 4 du convoyeur de tri 3 tout en évitant les interférences entre réceptacles 6 de deux dispositifs de permutation 8 successifs le long du convoyeur de tri 3.

Aussi, afin de faciliter le transfert des colis 2 dans les réceptacles 6, chaque sortie de tri 4 est équipée d'une trémie 9 de remplissage qui s'étend vers le bas, depuis le convoyeur de tri 3 vers un réceptacle 6 en position de remplissage.

Les moyens d'accostage 8b se présentent ici sous la forme d'une pince fixée à l'arbre 8a du système de permutation 8 apte à venir pincer une tige 6d s'étendant verticalement en face avant d'un réceptacle 6.

Les moyens d'accostage 8b permettent ainsi de guider l'insertion du réceptacle 6 dans l'emplacement d'accostage 8c et de bloquer le réceptacle 6 dans la position adéquate pour sa rotation autour de l'axe A1.

Le dispositif de permutation 8 peut également comprendre une coiffe 10 de verrouillage présentant une ouverture 13 latérale.

La coiffe 10 est ici conçue pour venir coiffer l'arbre 8a et les moyens d'accostage 8b de sorte à empêcher le retrait d'un réceptacle 6 accosté au moyen d'accostage 8b lorsqu'il est en position de remplissage et à autoriser l'évacuation d'un réceptacle 6 accosté au moyen d'accostage 8b par l'ouverture 13 de la coiffe 10 lorsqu'il est dans une position d'évacuation dans laquelle le réceptacle 6 est orienté à l'opposé d'un réceptacle 6 en position de remplissage par rapport à l'arbre 8a.

La coiffe 10 de verrouillage est également apte à empêcher le retrait d'un réceptacle 6 accosté au moyen d'accostage 8b entre les positions de remplissage et d'évacuation.

On comprendra donc que seul le réceptacle 6 en position d'évacuation pourra être évacué.

Ainsi, comme représenté sur la figure 6, si le réceptacle 6 en position de remplissage est bien évidemment verrouillé, les deux autres réceptacles 6 adjacents ici en position d'attente sont également verrouillés.

Grâce à cette coiffe 10 le risque de chute des réceptacles 6 pendant leur rotation est réduit.

La coiffe 10 permet également de verrouiller les pinces des moyens d'accostage 8b avec les tiges 6d des réceptacles 6 lorsqu'ils ne sont pas en rotation R1, notamment afin d'éviter tout risque d'arrachement du réceptacle 6 en cours de remplissage.

Une seconde coiffe de verrouillage pourra également être disposée à l'extrémité opposée de l'arbre 8a pour bloquer le bas des réceptacles 6 et améliorer le maintien des réceptacles 6 pendant leur rotation R1.

Comme représenté sur les figures 1 et 3, un système de détection de position 11 de réceptacle 6 peut également venir équiper le dispositif de permutation 8 afin de déterminer quel réceptacle 6 est en position de remplissage.

Dans ce cas, l'unité de contrôle-commande 7 comprend en mémoire l'ordonnancement des réceptacles 6 au niveau de chaque sortie de tri 4 et, en réponse à la détection dudit système de détection 11, commande la rotation R1 du dispositif de permutation 8 pour placer en position de remplissage le réceptacle 6 dont l'adresse de destination correspond à l'adresse de destination du colis 2 courant à trier.

L'équipement de tri 1 selon l'invention pourra également comprendre un système de détection du niveau de remplissage 12 du réceptacle 6 lorsqu'il est en position de remplissage.

Ainsi, en réponse au dépassement d'un certain seuil du niveau de remplissage du réceptacle 6, l'unité de contrôle-commande 7 commande le déplacement du réceptacle 6 en position d'évacuation.

Ainsi, lors de l'utilisation de l'équipement de tri 1 selon l'invention pour trier un colis 2 courant, l'unité de contrôle-commande 7 interroge dans un premier temps le système de système de détection 11 de position de réceptacle 6.

Si le réceptacle 6 dont l'adresse de destination correspond à celle du colis 2 à trier, le colis 2 est évacué dans le réceptacle 6.

Si l'adresse ne correspond pas, le système de permutation 8 déplace en rotation R1 les réceptacles 6 pour positionner en position de remplissage le réceptacle 6 avec l'adresse de destination correspondante.

Si le dispositif de permutation 8 n'a pas le temps de positionner le bon réceptacle 6 à temps, le colis 2 est mis en recirculation sur le convoyeur de tri 3.

Une fois le colis 2 éjecté, l'unité de contrôle-commande 7 interroge ensuite le système de détection du niveau de remplissage 12 de réceptacle 6.

Si le réceptacle 6 devant recevoir le colis 2 est plein, l'unité de contrôle-commande 7 interdit toute évacuation de colis 2 dans ce réceptacle 6 et commande le dispositif de permutation 8 pour positionner le réceptacle 6 en position d'évacuation et permettre son évacuation manuelle ou automatique et son remplacement par un réceptacle 6 vide.

Une fois le réceptacle 6 plein remplacé par un vide, l'unité de contrôle-commande 7 commande la rotation des réceptacles 6 pour placé le réceptacle 6 approprié en position de remplissage et permettre l'évacuation du colis 2.

## Revendications

1. Equipement de tri (1) de colis (2) comprenant un convoyeur de tri (3), des sorties de tri (4) réparties le long dudit convoyeur et une unité de contrôle-commande (7) apte à commander le convoyeur de tri pour trier les colis dans les sorties de tri en fonction de leur adresse de destination, chaque sortie de tri étant agencée pour stocker une pluralité de réceptacles (6) de tri chacun associé à une adresse de destination de colis en mémoire de l'unité de contrôle-commande, **caractérisé en ce que** l'équipement comprend également à chaque sortie de tri un dispositif de permutation (8) des réceptacles comprenant un arbre mobile en rotation autour d'un axe (A1) muni de moyens d'accostage pour réceptacles de sorte que l'arbre est conçu pour entrainer en rotation autour de l'axe les réceptacles accostés, et **en ce que** l'unité de contrôle-commande commande le dispositif de permutation pour immobiliser un réceptacle, dont l'adresse de destination de colis associée en mémoire de l'unité de contrôle-commande correspond à l'adresse de destination d'un colis courant à trier, dans une position de remplissage dans laquelle le réceptacle est positionné sous la sortie de tri pour réceptionner un colis.

2. Equipement de tri selon la revendication 1, **caractérisé en ce que** le dispositif de permutation comprend une coiffe (10) de verrouillage présentant une ouverture (13) latérale, ladite coiffe venant coiffer l'arbre et les moyens d'accostage de sorte à empêcher le retrait d'un réceptacle accosté au moyen d'accostage lorsqu'il est en position de remplissage et à autoriser l'évacuation d'un réceptacle accosté au moyen d'accostage par l'ouverture de la coiffe lorsqu'il est dans une position d'évacuation dans laquelle le réceptacle est orienté à l'opposé d'un réceptacle en position de remplissage par rapport à l'arbre.

3. Equipement de tri selon les revendications 1 ou 2, **caractérisé en ce que** ladite coiffe de verrouillage est également apte à empêcher le retrait d'un réceptacle accosté au moyen d'accostage entre les positions de remplissage et d'évacuation.

4. Equipement de tri selon l'une quelconque des revendications précédentes, **caractérisé en ce que** le dispositif de permutation comprend des rampes (8b) parallèles deux à deux et s'étendant sensiblement horizontalement depuis l'arbre, et **en ce que** les rampes sont agencées pour porter les réceptacles au-dessus du sol (S) une fois les réceptacles accostés.

5. L'équipement de tri selon la revendication 4, **caractérisé en ce que** les rampes présentent une extrémité libre (8c) sensiblement inclinée vers le sol.

6. L'équipement de tri selon l'une quelconque des revendications précédentes, **caractérisé en ce que** le dispositif de permutation comprend un système de détection de position (11) de réceptacle apte à déterminer quel réceptacle de la sortie de tri est en position de remplissage, et **en ce que** l'unité de contrôle-commande comprend en mémoire l'ordonnancement des réceptacles au niveau de chaque sortie de tri et, en réponse à la détection dudit système de détection, commande la rotation du dispositif de permutation pour placer en position de remplissage le réceptacle dont l'adresse de destination correspond à l'adresse de destination du colis courant à trier.

7. L'équipement de tri selon l'une quelconque des revendications précédentes, **caractérisé en ce qu'**il comprend un système de détection du niveau de remplissage (12) de réceptacle en position de remplissage, et **en ce qu'**en réponse au dépassement d'un certain seuil du niveau de remplissage du réceptacle, l'unité de contrôle-commande commande le déplacement du réceptacle en position d'évacuation.

8. Equipement de tri selon l'une quelconque des revendications précédentes, **caractérisé en ce que** chaque sortie de tri est équipée d'une trémie (9) de remplissage qui s'étend vers le bas depuis le convoyeur vers un réceptacle en position de remplissage.

9. Equipement de tri selon l'une quelconque des revendications précédentes, **caractérisé en ce que** les réceptacles sont des sacs (6a) ouverts sur le dessus montés sur des trolleys (6b) à roulettes.

10. Equipement de tri selon l'une quelconque des revendications précédentes, **caractérisé en ce que** le convoyeur est un convoyeur en boucle.

## Patentansprüche

1. Sortieranlage (1) von Paketen (2), umfassend einen Sortierförderer (3), Sortierausgänge (4), die entlang des Förderers verteilt sind, und eine Kontroll-Steuer-Einheit (7), die geeignet ist, den Sortierförderer zu steuern, um die Pakete in den Sortierausgängen in Abhängigkeit von ihrer Bestimmungsadresse zu sortieren, wobei jeder Sortierausgang dazu vorgesehen ist, eine Vielzahl von Sortierbehältern (6) zu speichern, die jeweils einer Paketbestimmungsadresse im Speicher der Kontroll-Steuer-Einheit zugeordnet sind, **dadurch gekennzeichnet, dass** die Anlage auch an jedem Sortierausgang eine Wechselvorrichtung (8) der Behälter umfasst, umfassend eine drehbeweglich Welle um eine Achse (A1), die mit Andockmitteln für Behälter versehen ist, so dass die Welle eingerichtet ist, um die angedockten Behälter um die Achse in Drehung anzutreiben, und dass die Kontroll-Steuer-Einheit die Wechselvorrichtung steuert, um einen Behälter, dessen zugeordnete Paketbestimmungsadresse im Speicher der Kontroll-Steuer-Einheit der Bestimmungsadresse eines zu sortierenden laufenden Pakets entspricht, in einer Befüllungsposition festzustellen, in der der Behälter unter dem Sortierausgang angeordnet ist, um ein Paket aufzunehmen.

2. Sortieranlage nach Anspruch 1, **dadurch gekennzeichnet, dass** die Wechselvorrichtung eine Verriegelungsabdeckung (10) umfasst, die eine Seitenöffnung (13) aufweist, wobei die Abdeckung die Welle und die Andockmittel abdeckt, um zu verhindern, dass sich ein an das Andockmittel angedockter Behälter entfernt, wenn er in Befüllungsposition ist, und das Ausbringen eines an das Andockmittel angedockten Behälters durch die Öffnung der Abdeckung zu gestatten, wenn er in einer Ausbringposition ist, in der der Behälter entgegengesetzt zu einem Behälter in Befüllungsposition in Bezug zur Welle ausgerichtet ist.

3. Sortieranlage nach den Ansprüchen 1 oder 2, **dadurch gekennzeichnet, dass** die Verriegelungsabdeckung auch geeignet ist, zu verhindern, dass sich ein an das Andockmittel angedockter Behälter zwischen den Befüllungs- und Ausbringpositionen entfernt.

4. Sortieranlage nach einem der vorhergehenden Ansprüche, **dadurch gekennzeichnet, dass** die Wechselvorrichtung zueinander parallele Rampen (8b) umfasst und sich im Wesentlichen horizontal von der Welle aus erstreckt, und dass die Rampen dazu vorgesehen sind, die Behälter über dem Boden (S) zu tragen, wenn die Behälter angedockt sind.

5. Sortieranlage nach Anspruch 4, **dadurch gekennzeichnet, dass** die Rampen ein freies Ende (8c) aufweisen, das im Wesentlichen zum Boden geneigt ist.

6. Sortieranlage nach einem der vorhergehenden Ansprüche, **dadurch gekennzeichnet, dass** die Wechselvorrichtung ein System zur Positionserfassung (11) eines Behälters umfasst, das geeignet ist, zu bestimmen, welcher Behälter des Sortierausgangs in Befüllungsposition ist, und dass die Kontroll-Steuer-Einheit im Speicher die Reihenfolge der Behälter im Bereich jedes Sortierausgangs umfasst und als Antwort auf die Erfassung des Erfassungssystems die Drehung der Wechselvorrichtung steuert, um den Behälter, dessen Bestimmungsadresse der Bestimmungsadresse des zu sortierenden laufenden Pakets entspricht, in Befüllungsposition anzuordnen.

7. Sortieranlage nach einem der vorhergehenden Ansprüche, **dadurch gekennzeichnet, dass** sie ein Erfassungssystem des Behälterfüllstandes (12) in Befüllungsposition umfasst, und dass als Antwort auf die Überschreitung einer gewissen Grenze des Füllstandes des Behälters die Kontroll-Steuer-Einheit die Verlagerung des Behälters in Ausbringposition steuert.

8. Sortieranlage nach einem der vorhergehenden Ansprüche, **dadurch gekennzeichnet, dass** jeder Sortierausgang mit einem Fülltrichter (9) ausgestattet ist, der sich nach unten vom Förderer aus zu einem Behälter in Befüllungsposition erstreckt.

9. Sortieranlage nach einem der vorhergehenden Ansprüche, **dadurch gekennzeichnet, dass** die Behälter nach oben offene Säcke (6a) sind, die auf Rollwägen (6b) montiert sind.

10. Sortieranlage nach einem der vorhergehenden Ansprüche, **dadurch gekennzeichnet, dass** der Förderer ein umlaufender Förderer ist.

## Claims

1. A sorting facility (1) for sorting parcels (2), which sorting facility comprises a sorting conveyor (3), sorting outlets (4) distributed along said conveyor, and a monitoring and control unit (7) suitable for controlling the sorting conveyor so as to sort the parcels into the sorting outlets as a function of their destination addresses, each sorting outlet being arranged to store a plurality of sorting receptacles (6), each of which is associated with a parcel destination address in a memory of the monitoring and control unit, said sorting facility being **characterized in that**, at each sorting outlet, it further comprises a swap-over device (8) for swapping the receptacles over, which swap-over device comprises a shaft mounted to move in rotation about an axis (Al) and provided with docking means for docking with receptacles so that the shaft is designed to drive the docked receptacles in rotation about the axis, and **in that** the monitoring and control unit controls the swap-over device so that a receptacle for which the destination address associated with it in the memory of the monitoring and control unit corresponds to the destination address of a current parcel to be sorted is held stationary in a filling position in which the receptacle is positioned under the sorting outlet so as to receive a parcel.

2. A sorting facility according to claim 2, **characterized in that** the swap-over device further comprises a locking cap (10) provided with a side opening (13), said cap coming to cap the shaft and the docking means so as to prevent a receptacle that is docked with the docking means from being withdrawn when said receptacle is in a the filling position, and so as to allow a receptacle that is docked with the docking means to be removed via the opening in the cap when said receptacle is in a removal position in which it is angularly positioned on the opposite side of the shaft from a receptacle that is in the filling position.

3. A sorting facility according to claim 1 or claim 2, **characterized in that** said locking cap is also suitable for preventing a receptacle that is docked with the docking means from being withdrawn between the filling position and the removal position.

4. A sorting facility according to any preceding claim, **characterized in that** the swap-over device further comprises runners (8b) that are mutually parallel in pairs and that extend substantially horizontally from the shaft, and **in that** the runners are arranged to carry the receptacles above the floor (S) once the receptacles are docked.

5. A sorting facility according to claim 4, **characterized in that** each of the runners has a free end (8c) that is significantly inclined towards the floor.

6. A sorting facility according to any preceding claim, **characterized in that** the swap-over device comprises a receptacle position detection system (11) suitable for determining which receptacle of the sorting outlet is in the filling position, and **in that** the monitoring and control unit contains, in a memory, the order of the receptacles at each sorting outlet and, in response to the detection performed by said detection system, causes the swap-over device to move in rotation so as to place in the filling position the receptacle that has its destination address corresponding to the destination address of the current parcel to be sorted.

7. A sorting facility according to any preceding claim, **characterized in that** it further comprises a detection system (12) for detecting the filling level of a receptacle in the filling position, and **in that**, in response to a certain threshold of the filling level of the receptacle being exceeded, the monitoring and control unit causes the receptacle to be moved to the removal position.

8. A sorting facility according to any preceding claim, **characterized in that** each sorting outlet is equipped with a filling chute (9) that extends downwards from the conveyor to a receptacle in the filling position.

9. A sorting facility according to any preceding claim, **characterized in that** the receptacles are bags (6a) that are open at their tops and that are mounted on trolleys (6b) having small wheels or casters.

10. A sorting facility according to any preceding claim, **characterized in that** the conveyor is a looped conveyor.
